# EUROPÄISCHE PATENTSCHRIFT

(11) **EP 0 494 045 B1**
(45) Veröffentlichungstag und Bekanntmachung des Hinweises auf die Patenterteilung: **19.04.1995**
(21) Anmeldenummer: 91810915.8
(22) Anmeldetag: 25.11.1991
(51) Int. Cl.: B01D 9/00

(54) **Verfahren und Vorrichtung zur Stofftrennung mittels Kristallisation**
Process and apparatus for separating matter by means of crystallization
Procédé et appareil pour séparer des substances au moyen de cristallisation

(30) Priorität: 21.12.1990 CH 4109/90
(43) Veröffentlichungstag der Anmeldung: 08.07.1992
(73) Patentinhaber: Sulzer Chemtech AG, CH-8404 Winterthur (CH)
(72) Erfinder: Slobodan, Jancic, Dr., CH-6900 Lugano (CH); Evangelos, Sakellariou, Dr., CH-8057 Zürich (CH)
(74) Vertreter: Hammer, Bruno Dr.

(56) Entgegenhaltungen:
- FR-A- 2 273 567
- US-A- 3 962 082
- US-A- 4 893 792

## Beschreibung

Die Erfindung betrifft ein Verfahren zur Stofftrennung mittels Kristallisation von schwer kristallisierbaren Gemischen flexibler C-H-Ketten wie Fettsäuren, Triglyceriden, Fettalkoholen, Vitaminen, Paraffinen und/oder Wachsen. Derartige schwer trennbare Gemische wurden bisher meist mit Lösungsmitteln in hohem Ueberschuss versetzt, um überhaupt eine Separation von verschiedenen Fraktionen mit engem Schmelzpunktbereich erzielen zu können. In einem Verfahren gemäss CH-PS 621 262 wird die Lösung unter stetiger Abkühlung im Kreislauf durch Filterböden einer Trennkolonne hindurchgepumpt. Dabei werden in der Lösung Kristalle gebildet, an den Filterböden abgeschieden und nach dem Abscheiden einer Fraktion mit heissem Lösungsmittel ausgewaschen.

Diese bekannten Methoden weisen jedoch grosse Nachteile auf. Sie sind aufwendig, teuer im Betrieb, erfordern einen grossen Ueberschuss an Lösungsmitteln und damit grosse und komplizierte Kristallisationsanlagen. Einsatz von Lösungsmitteln bedeutet Explosionsgefahr und in vielen Anwendungen, z.B. bei Lebensmitteln, sind Lösungsmittel gar nicht zulässig.

Es ist daher Aufgabe der vorliegenden Erfindung, ein Verfahren und eine Kristallisationsvorrichtung zu schaffen, welche diese Nachteile überwindet und eine wirtschaftliche und effiziente Fraktionierung schwer kristallisierbarer Gemische ohne Einsatz von Lösungsmitteln ergibt. Diese Aufgabe wird durch das Verfahren gemäss Anspruch 1 gelöst. Auf der grossen Oberfläche der 3-dimensionalen Kristallisationsmatrix findet eine effiziente selektive Kristallisation aus der Schmelze statt. Durch Zentrifugieren wird zuerst die verbleibende Schmelze und anschliessend die aufgeschmolzene Phase auf einfache und wirksame Art separiert und abgeführt. Vorteilhafte Weiterbildungen der Erfindung können gemäss abhängigen Ansprüchen als besonders wirksames Aufheizverfahren elektromagnetische Bestrahlung, vorzugsweise im Mikrowellenfrequenzbereich zwischen 0.5 und 50 GHz, aufweisen. Ein geeignetes Aufheizen kann aber auch mittels Durchströmen eines heissen, mit dem Stoffgemisch nicht mischbaren Mediums wie Wasser oder Luft erfolgen. Und es kann auch mittels Durchströmen von heissen Fraktionen des Stoffgemisches selber erfolgen, wobei diese Fraktionen nicht weniger rein sein sollen als die aufzuschmelzende Phase. Zur Erhöhung der Reinheit einer Fraktion kann eine Schwitzphase vor dem Aufschmelzen dienen, in der durch kurzes Wiederaufheizen oberflächennahes Material abgeschmolzen und durch Zentrifugieren entfernt wird.

Je nach Anwendungszweck kann das erfindungsgemässe Verfahren auf verschiedene Arten ausgeführt werden. Um eine bestimmte Fraktion zu erhalten, kann die Schmelze über eine Abkühlphase kontinuierlich im Kreislauf durch die Trägermatrix hindurchbewegt werden. Um mehrere Fraktionen zu separieren, kann das Gemisch auch aufeinanderfolgend in mehrere Stufen je über einen Abkühlbereich behandelt und dabei je eine Fraktion auskristallisiert werden, mit absteigenden Ausgangstemperaturen der Abkühlbereiche. Das Gemisch kann aber auch im kontinuierlichen Betrieb jede Stufe nur einmal durchlaufen, anschliessend in die nächste Stufe eingespiesen und nach der letzten Stufe abgeführt oder wieder in die erste Stufe eingespiesen werden. Abwechslungsweise kann dabei jeweils eine Stufe, zwecks Aufschmelzung und Abführung von deren abgelagerter kristallinen Phase, überbrückt werden. Je nach Substanzgemisch können sich die Abkühlbereiche auch leicht überlappen.

Ein erfindungsgemässer Kristallisator zur Ausführung des Verfahrens ist im Anspruch 13 beschrieben. Vorteilhafte Weiterentwicklungen des Kristallisators können als Heizeinrichtung einen Mikrowellengenerator mit Mikrowellenfenstern in den Innenraum und mit einer schwach absorbierenden Trägermatrix aufweisen. Zur Förderung der Kristallisation kann die Trägermatrix eine mikrostrukturierte Oberfläche mit grosser spezifischer Oberfläche von vorzugsweise 2 000 bis 10 000 m²/m³ aufweisen. Zur Erleichterung des Abflusses beim Zentrifugieren kann die Struktur der Trägermatrix in radialer Richtung offen sein. Günstige Varianten der Trägermatrix können aus einem offenporigen Schaum mit einer mittleren Porengrösse von 0,3 bis 3 mm bestehen. Die Trägermatrix kann auch aus Nadelfilz bestehen, welcher auf einer Tragstruktur fixiert ist, um die notwendige Festigkeit unter Zentrifugalkräften zu erreichen. Als Materialien für die Trägermatrix können sich eignen: Inerte keramische Stoffe wie Aluminiumoxid, Glas oder organische Polymere. Zur Optimierung und Vereinfachung des Betriebs kann der Kristallisator eine Steuer- und Regeleinheit mit Temperatursensoren und einem Programmteil aufweisen.

Eine erfindungsgemässe Anlage kann aus mehreren Kristallisatoren bestehen, welche je nach Anwendung beliebig parallel und in Serie geschaltet betrieben werden können.

Im folgenden wird die Erfindung anhand von Beispielen und Figuren näher erläutert. Es zeigen:
- Fig. 1: einen erfindungsgemässen Kristallisator mit rotierbarer Trägermatrix und Mikrowellenheizung;
- Fig. 2: Beispiele zeitlicher Temperaturverläufe mit Abkühlstufen;
- Fig. 3: verschiedene Betriebsarten des erfindungsgemässen Verfahrens mit kontinuierlichem und diskontinuierlichem Betrieb;
- Fig. 4: Beispiele erfindungsgemäss produzierter Kristallfraktionen;
- Fig. 5: Beispiele verschiedener Schaltungen von mehreren Kristallisatoren in einer Anlage;
- Fig. 6: Beispiele vom Kristallisations-Trägermatrizen;
- Fig. 7: das Prinzip der erfindungsgemässen selektiven Kristallisation in der Trägermatrix.

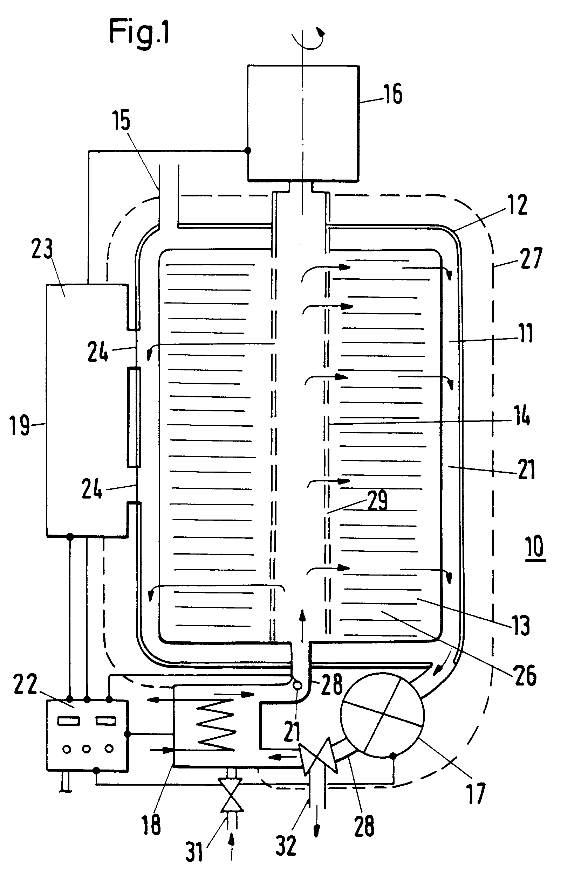

Ein Kristallisator 10 von Fig. 1 mit einem Innenraum 11 und einem umgebenden Gehäuse 12 weist eine Kristallisations-Trägermatrix 13, fixiert auf einer Rotationsachse 14, auf. Diese wird von einem externen Motor 16 angetrieben. Das über einen Stutzen 15 eingefüllte Substanzgemisch wird durch eine Heizeinrichtung 19, hier in Form eines Mikrowellengenerators 23 mit Fenstern 24 in den Innenraum 11, erhitzt und geschmolzen. Die Schmelze wird im Kreislauf durch das mit Oeffnungen 29 versehene Rotationsachsrohr 14 durch die Trägermatrix 13 hindurch und über Verbindungsleitungen 28 in eine Temperiervorrichtung 18 geführt. Die Fördergeschwindigkeit der Schmelze in diesem Kreislauf und vor allem die den Kristallisationsvorgang beeinflussende Durchströmgeschwindigkeit in der Trägermatrix 13 wird durch eine Fördereinrichtung 17, z.B. eine Pumpe, eingestellt. Die rotierende Trägermatrix 13 wirkt selber auch das Zentrifugalpumpe, so dass schon dadurch eine Umwälzung der Schmelze erzeugt wird. Mit einer zusätzlichen, separat steuerbaren Pumpe kann jedoch die Durchströmungsgeschwindigkeit in der Trägermatrix unabhängig von deren Rotationsgeschwindigkeit verändert und optimiert werden. Je nach Substanzgemisch, Struktur der Trägermatrix 13 und Betriebsart können so optimale selektive Kristallisationsbedingungen ermittelt und eingestellt werden. Mit der Temperiervorrichtung 18 wird entsprechend ein gewünschter optimaler Temperaturverlauf in einem Abkühlbereich erzeugt, d.h. ein langsames, mittels Temperatursensoren 21 kontrolliertes Absinken der Schmelzentemperatur während des Zirkulierens durch die Trägermatrix 13 hindurch. Eine umhüllende Isolation 27 sorgt für eine möglichst homogene Temperaturverteilung in der Schmelze. Eine mit Motor 16, Förderpumpe 17, Temperiervorrichtung 18, Heizeinrichtung 19 und Sensoren 21 verbundene Steuer- und Regeleinheit 22 ermöglicht Optimierung, Ueberwachung und automatischen Betrieb beliebiger Kristallisationsprozesse. Dazu kann die Steuereinheit 22 auch einen Programmteil enthalten und eine bidirektionale Kommunikation zwischen Betreiber und Prozessablauf ermöglichen. Die Temperiervorrichtung 18, z.B. in Form eines Wärmetauschers, kann je nach Betriebsart als Heizung oder als Kühlung dienen, um das gewünschte Temperaturprofil der Schmelze entstehen zu lassen. Das Einfüllen des Substanzgemisches kann auch über einen Eingang 31 in die Temperiervorrichtung 18 erfolgen. Ueber einen Ausgang 32 wird die Substanz abgelassen oder einer weiteren Kristallisationsstufe zugeführt.

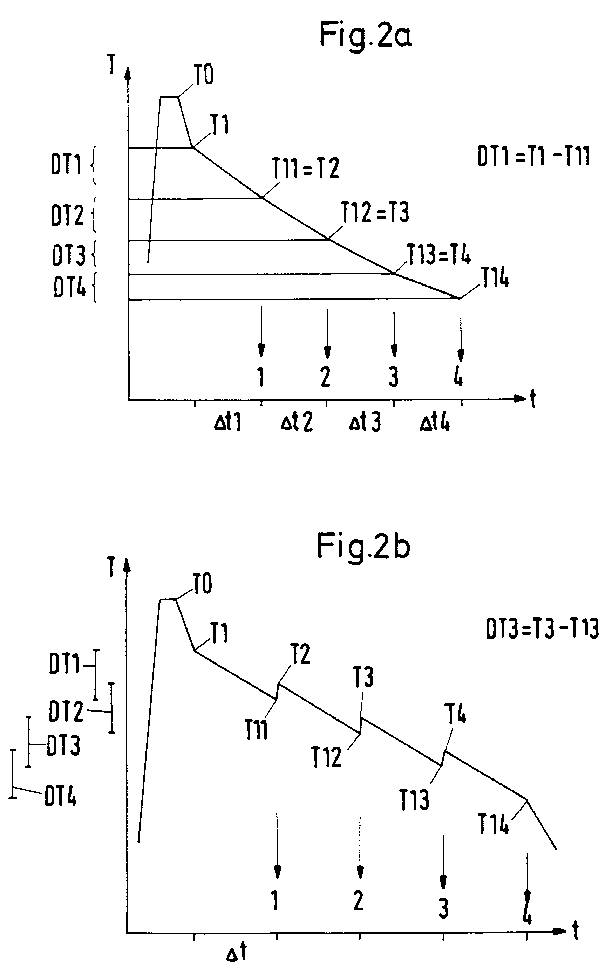

Fig. 2 zeigt zwei Beispiele möglicher zeitlicher Temperaturverläufe des erfindungsgemässen Verfahrens über mehrere Abkühlbereiche DT1 bis DT4. Ein gegebenes Substanzgemisch z.B. Palmöl wird zuerst auf eine soweit über dem Schmelzpunkt liegende Temperatur T0 erhitzt, dass alle Aggregate vollständig separiert sind. Nach relativ raschem Absinken auf die Ausgangstemperatur T1 der ersten Stufe bei der die Kristallisation der härtesten Fraktion einsetzt, erfolgt ein verlangsamtes Abkühlen über den Abkühlbereich DT1 bis zur Endtemperatur T11 unter stetigem Durchströmen der Kristallisations-Trägermatrix 13 und kontinuierlicher Ablagerung der ersten Kristallphase 1 auf der Trägermatrix. Anschliessend wird die verbliebene Schmelze durch Zentrifugieren von der Trägermatrix entfernt und abgeführt. Die verbleibende Phase 1 auf der Trägermatrix wird, nach einer allfälligen Schwitzphase, welche ebenfalls abzentrifugiert wird, wieder erhitzt, geschmolzen und durch Zentrifugieren ebenfalls von der Matrix getrennt und abgelassen. Anschliessend wird die restliche Schmelze über den zweiten Abkühlbereich DT2 von der Ausgangstemperatur T2 ausgehend bis zur Endtemperatur T12 auf der Trägermatrix auskristallisiert und diese zweite Kristallphase 2 in analoger Weise separiert und abgeführt. In analoger Weise folgen weitere Stufen über die Abkühlbereiche DT3 und DT4 mit resultierenden Kristallphasen 3 und 4.

Nach Fig. 2b können sich die Abkühlbereiche DT1 bis DT4 auch überlappen, d.h. dass die Ausgangstemperaturen T2, T3, T4 der folgenden Stufen höher gewählt werden als die Endtemperaturen T11, T12, T13 der vorangehenden Stufen.

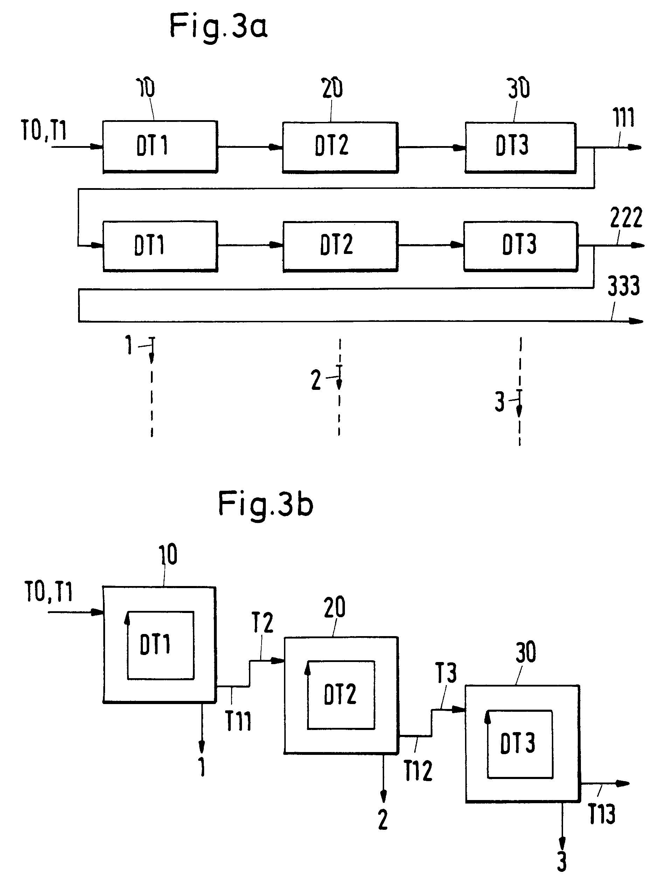

Nach Fig. 3 sind, schematisch dargestellt mit drei Kristallisatoren 10, 20, 30, verschiedene Betriebsarten möglich. Im kontinuierlichen Betrieb von Fig. 3a wird die Schmelze nach einmaligem Durchlaufen der Trägermatrix in der ersten Stufe DT1 im Kristallisator 10 unmittelbar in die zweite Stufe DT2 in Kristallisator 20 und anschliessend in die dritte Stufe DT3 von Kristallisator 30 geführt. Die verbleibende Schmelze kann anschliessend entweder abgelassen werden 111 oder für einen weiteren Durchlauf wieder aufgeheizt und in die erste Stufe DT1 von Kristallisator 10 eingespiessen werden. Die verbleibende Schmelze kann schliesslich nach zwei Durchläufen 222 oder nach drei Durchläufen 333 abgelassen werden. Anschliessend können die Phasen 1, 2, 3 in den Kristallisatoren 10, 20, 30 wie beschrieben aufgeschmolzen und abzentrifugiert werden.

Fig. 3b zeigt schematisch ein "Batch"-Verfahren indem die Stufen DT1, DT2 und DT3 diskontinuierlich nacheinander durchfahren werden. Dabei wird die Schmelze in jeder Abkühlstufe im Kreislauf mehrfach durch die Trägermatrix 13 hindurchbewegt, und erst nach mehr oder weniger vollständiger Auskristallisierung der entsprechenden Fraktion 1 wird die verbleibende Schmelze in die zweite Stufe DT2 vom Kristallisator 20 überführt. Dort wird die Fraktion 2 vollständig auskristallisiert und die verbliebene Schmelze wiederum erst anschliessend in die dritte Stufe überführt. Dieses diskontinuierliche Verfahren kann auch mit nur einem Kristallisator 10 durchgeführt werden, wenn nach Beendigung jeder Abkühlstufe DT1, DT2 die verbleibende Schmelze jeweils in einen Speicher zwischengelagert wird bis die abgelagerte Kristallphase 1, 2 von der Trägermatrix 13 entfernt und abgeführt ist.

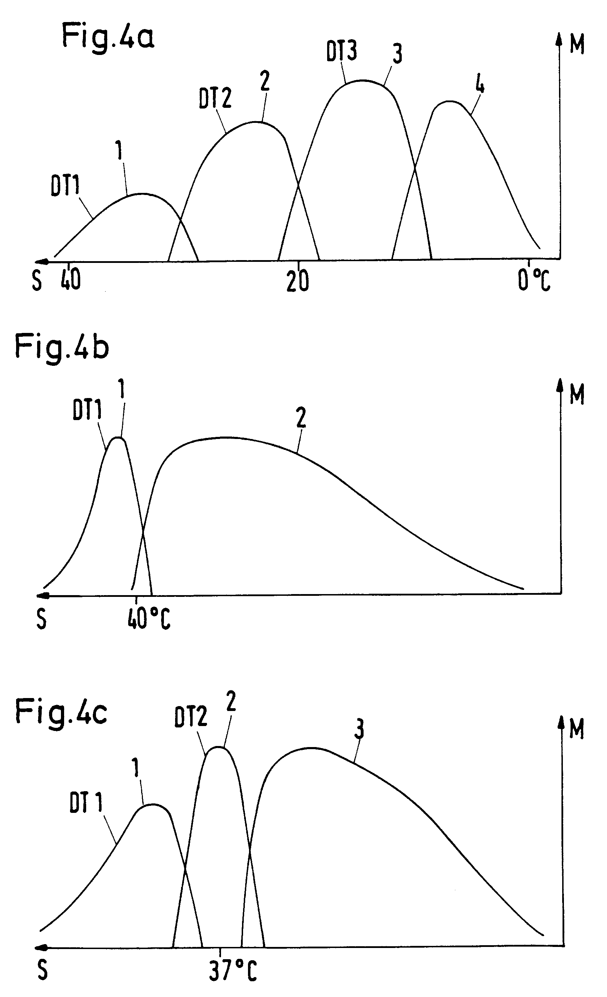

Fig. 4 zeigt Beispiele der Mengenverteilung erfindungsgemäss produzierter Kristallfraktionen nach verschiedenen Betriebsarten. Dabei sind die Mengenverteilungen M in Funktion des Schmelzpunktes S für die verschiedenen Fraktionen dargestellt. In Fig. 4a wird ein Substanzgemisch z.B. aus natürlichen Triglyceriden im "Batch"-Betrieb (wie in Fig. 3b) mit vier Abkühlbereichen DT1 bis DT4 nacheinander auskristallisiert. Es werden damit die vier Kristallfraktionen 1, 2, 3 und 4 mit entsprechenden Schmelzpunktbereichen separiert: Eine harte Fraktion 1, mittlere Fraktionen 2 und 3 und eine Oelfraktion 4. Je nach Anwendung kann aber z.B. gemäss Fig. 4b auch nur eine harte oberste Fraktion 1 mit hohem Schmelzpunkt gewünscht sein, welche vom Rest 2, d.h. dem ganzen darunterliegenden Schmelzpunktbereich, getrennt wird. Als Komponente in Lebensmitteln kann z.B. gemäss Fig. 3c auch eine enge mittlere Fraktion 2 um 37° z.B. aus Kokosfett entsprechend der menschlichen Körpertemperatur gesucht sein, welche einen zart schmelzenden Geschmackseindruck erzeugt. Hier wird zuerst die breite obere Fraktion 1 separiert, anschliessend die eng begrenzte mittlere Fraktion 2 herauskristallisiert und vom Rest 3 getrennt.

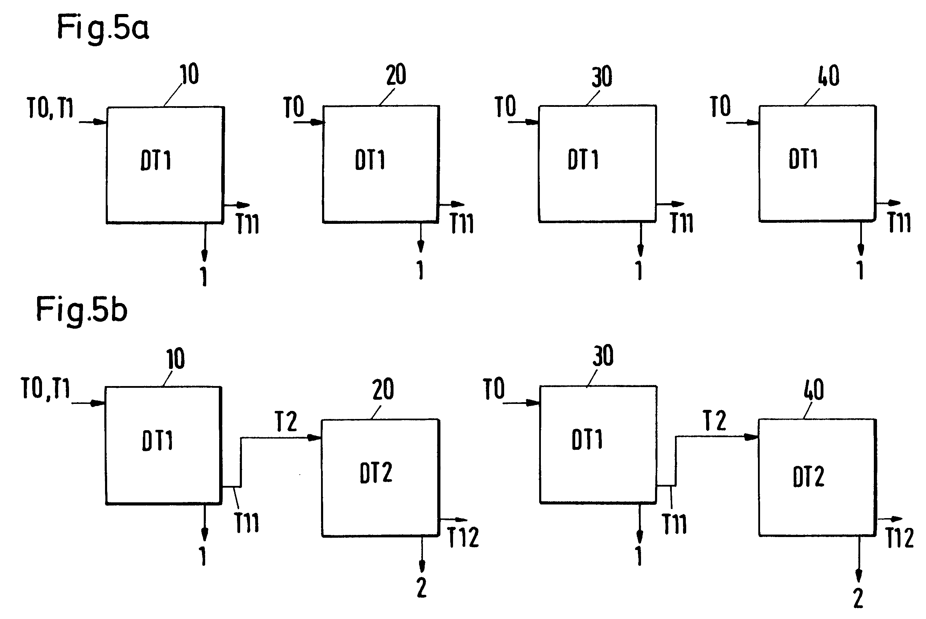

Nach Fig. 5 kann eine Anlage aus mehreren erfindungsgemässen Kristallisatoren 10, 20, 30, 40 bestehen, welche in Serie, parallel oder kombiniert betrieben werden können. Um z.B. eine oberste harte Fraktion 1 mit hoher Ausbeute zu gewinnen (gemäss Fig. 4b), werden alle vier Kristallisatoren im "Batch"-Verfahren über den Abkühlbereich DT1 parallel betrieben gemäss Fig. 5a. In Fig. 5b werden je zwei in Serie geschaltete Kristallisatoren 10, 20 und 30, 40, parallel betrieben, um z.B. gemäss Fig. 4c eine definierte mittlere Fraktion 2 zu separieren. Es können natürlich auch alle vier Kristallisatoren 10 bis 40 in Serie betrieben werden analog zu den Beispielen von Fig. 3a und 3b.

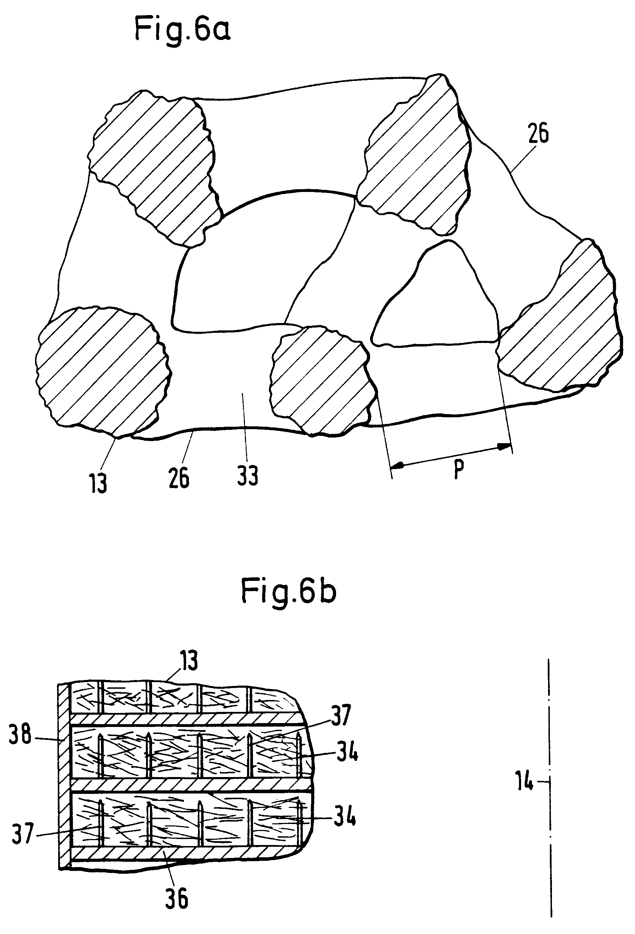

Von grosser Bedeutung für das erfindungsgemässe Verfahren ist die Struktur der Kristallisations-Trägermatrix 13. Die Matrix muss einerseits eine kristallisationsfördernde grosse Oberfläche mit geeeigneter Mikrostruktur aufweisen und andererseits genügend hohe mechanische Festigkeit aufweisen, dass sie beim Zentrifugieren nicht wegrutscht oder zusammengepresst wird. In Fig. 6 sind Beispiele geeigneter Strukturen der Trägermatrix dargestellt. Fig. 6a zeigt im Schnitt einen Teil einer Trägermatrix aus einem offenporigen Schaum 33 mit mittleren Porengrössen P im Bereich von 1/10 mm bis mm und mit einer Oberfläche 26. Solche Strukturen können z.B. aus keramischen Materialien wie Aluminiumoxid, aus Glas oder Polymeren hergestellt sein. Die Oberfläche 26 weist vorzugsweise eine Mikrostrukturierung auf in der Grössenordnung von 1/100 » bis », was der Grösse der Kristallkeime entspricht.

Eine andere Ausführung der Trägermatrix 13 besteht nach Fig. 6b aus aufeinandergeschichteten Nadelfilzscheiben 34, welche auf einer Tragstruktur 36 in Form von mit Stiften 37 versehenen Scheiben, ähnlich einem Nagelbrett, fixiert sind. Ein Aussenkäfig 38 gibt der ganzen Struktur zusätzliche mechanische Festigkeit. Der Nadelfilz kann z.B. aus Polyester oder Polypropylen bestehen.

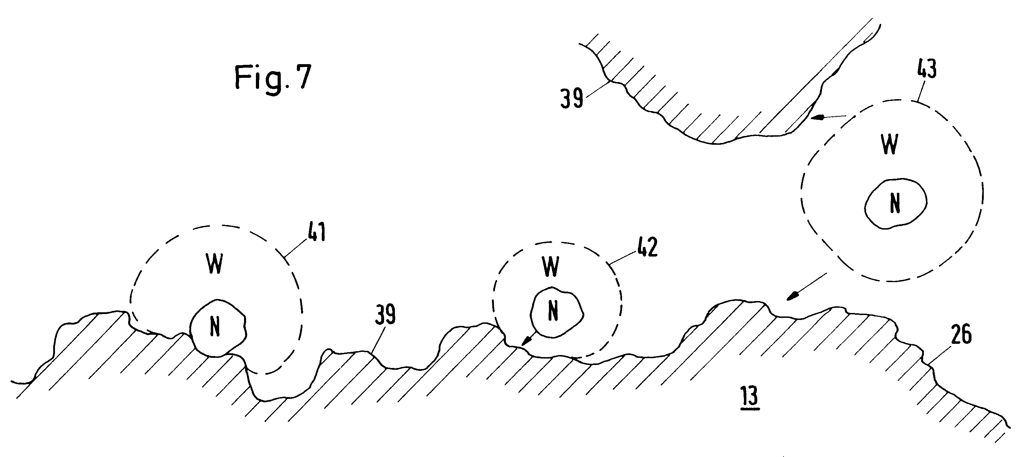

Fig. 7 zeigt schematisch die Kristallisationsvorgänge in der Trägermatrix, welche alle durch die Struktur und Art der Trägermatrix gefördert und verstärkt werden. Es können folgende drei mögliche Kristallisationsvarianten unterschieden werden:

41 Keimbildung oder Nukleation N initiiert und lokalisiert an der mikrostrukturierten Oberfläche 39 der Trägermatrix. Der lokalisierte Kristallkeim N wächst anschliessend W an Ort weiter.

42 schon in der Schmelze entstandene Kristallisationskeime N werden bevorzugt an der Oberfläche 39 fixiert und wachsen anschliessend hier ebenfalls weiter.

43 in der Schmelze gewachsene, noch nicht lokalisierte Kristallite werden zusätzlich im Sinne einer Filterwirkung in der ganzen Trägerstruktur festgehalten.

Alle drei Prozesse können somit, abhängig von Substanzgemisch und Prozessparametern, im erfindungsgemässen Verfahren durch die Trägermatrix verstärkt oder überhaupt erst ermöglicht, ablaufen. Dies ergibt eine maximale und wirtschaftliche selektive Kristallisation und Trennwirkung. Ueberdies ist dies eine sehr schonende Behandlung ohne Ueberhitzung, was sich speziell auch für empfindliche Substanzen wie Vitamine besonders eignet.

### Bezeichnungsliste

- 1, 2, 3, 4: abgelagerte Kristallphasen, Fraktionen
- 10, 20, 30, 40: Kristallisatoren
- 11: Innenraum
- 12: Gehäuse
- 13: Kristallisations-Trägermatrix
- 14: Rotationsachse
- 15: Einfüllstutzen
- 16: Motor für 14
- 17: Fördereinrichtung, (Pumpe)
- 18: Temperiervorrichtung
- 19: Heizeinrichtung
- 21: Temperatursensor
- 22: Steuer-/Regeleinheit
- 23: Mikrowellengenerator
- 24: Fenster für 23
- 26: Oberfläche von 13
- 27: Isolation
- 28: Verbindungsleitungen
- 29: Oeffnungen in 14
- 31: Eingang
- 32: Ausgang
- 33: offenporiger Schaum
- 34: Nadelfilz
- 36: Tragstruktur
- 37: Stifte
- 38: Aussenkäfig
- 39: mikrostrukturierte Oberfläche von 13
- 41, 42, 43: Kristallisationsprozesse in 13
- 111, 222, 333: Ablassen nach 1, 2, 3 Durchgängen, Fig. 3a
- T0: Aufheiztemperatur, Starttemperatur
- T: Temperatur
- T1, T2, T3, T4: Ausgangstemperaturen
- T11, T12, T13, T14: Endtemperaturen
- DT1, DT2, DT3, DT4: Abkühlbereiche, Kristallisationsstufen
- DT1 = T1 - T11: Abkühlbereich
- t: Zeit
- M: Menge
- S: Schmelzpunkt
- P: Porengrösse
- N: Nukleation, Kristallkeim
- W: Wachstum von N

## Patentansprüche

1. Verfahren zur Stofftrennung mittels Kristallisation von schwer kristallisierbaren Gemischen flexibler C-H-Ketten wie Fettsäuren, Triglyceriden, Fettalkoholen, Vitaminen, Paraffinen und/oder Wachsen, dadurch **gekennzeichnet,** dass das Gemisch in einem Kristallisator mit einer 3-dimensionalen Kristallisationsmatrix (13) mit grosser spezifischer Oberfläche und einer die Kristallisation begünstigenden, mikrostrukturierten Oberfläche (26) als Trägermaterial auf eine über seinem Schmelzpunkt liegende Temperatur T0 erhitzt wird, dass die Schmelze des Gemisches anschliessend langsam über einen Temperaturbereich (DT1) abgekühlt und gleichzeitig durch die Trägermatrix hindurch bewegt wird, wobei aus der übersättigten Schmelze eine selektive Kristallisation an der Trägermatrix (13) stattfindet, dass anschliessend durch Zentrifugieren die verbleibende Schmelze von der Trägermatrix entfernt wird, dass dann die auf der Trägermatrix abgelagerte Kristallphase (1) durch Aufheizen geschmolzen und diese aufgeschmolzene Phase schliesslich durch Zentrifugieren von der Trägermatrix getrennt und abgeführt wird.

2. Verfahren nach Anspruch 1, dadurch gekennzeichnet, dass die Bewegung der Schmelze durch die Trägermatrix hindurch durch Rotation der Trägermatrix selber erzeugt wird.

3. Verfahren nach Anspruch 1 oder 2, dadurch gekennzeichnet, dass das Aufheizen durch elektromagnetische Bestrahlung erfolgt.

4. Verfahren nach Anspruch 3, dadurch gekennzeichnet, dass die elektromagnetische Bestrahlung im Frequenzbereich zwischen 0,5 und 50 GHz liegt.

5. Verfahren nach Anspruch 1 oder 2, dadurch gekennzeichnet, dass das Aufheizen mittels Durchströmen eines heissen Mediums wie Wasser oder Luft erfolgt, welches mit dem Stoffgemisch nicht mischbar ist.

6. Verfahren nach Anspruch 1 oder 2, dadurch gekennzeichnet, dass das Aufheizen mittels Durchströmen von heissen Fraktionen des Stoffgemischs erfolgt, welche nicht weniger rein sind als die aufzuschmelzende Phase.

7. Verfahren nach einem der Ansprüche 1 bis 6, dadurch gekennzeichnet, dass die Schmelze in der Abkühlphase (DT1) im kreislauf kontinuierlich durch die Trägermatrix (13) hindurchbewegt wird.

8. Verfahren nach einem der Ansprüche 1 bis 7, gekennzeichnet durch eine Schwitzphase vor dem Aufschmelzen, in der die abgelagerte Kristallphase durch kurzes Wiederaufheizen leicht erwärmt wird, so dass oberflächennahes Material schmilzt und durch Zentrifugieren ebenfalls entfernt wird.

9. Verfahren nach einem der Ansprüche 1 bis 8, dadurch gekennzeichnet, dass das Gemisch aufeinanderfolgend in mehreren Stufen je über einen Abkühlbereich (DT1, DT2, DT3) behandelt wird und dabei je eine Fraktion (1, 2, 3) auskristallisiert wird, mit absteigenden Ausgangstemperaturen: T1 > T2 > T3 der Abkühlbereiche.

10. Verfahren nach Anspruch 9, dadurch gekennzeichnet, dass das Gemisch im kontinuierlichen Betrieb jede Stufe einmal durchläuft, anschliessend in die nächstfolgende Stufe eingespiesen und nach der letzten Stufe abgeführt oder wieder in die erste Stufe eingespiesen wird, und wobei abwechslungsweise jeweils eine Stufe zwecks Aufschmelzung und Abführung von deren abgelagerter kristalliner Phase überbrückt wird.

11. Verfahren nach Anspruch 9 für diskontinuierlichen Betrieb bei dem das Gemisch chargenweise jede Stufe (DT1) mehrfach durchläuft und erst nach Ablagerung eines Grossteils der entsprechenden Fraktion (1) in die nächstfolgende Stufe (DT2) übergeführt wird und wobei die Stufen nach erfolgter Beladung durch Aufschmelzen und Zentrifugieren entladen werden.

12. Verfahren nach einem der Ansprüche 9 bis 11, dadurch gekennzeichnet, dass sich die Abkühlbereiche (DT1, DT2, DT3) überlappen.

13. Kristallisator zur Ausführung des Verfahrens nach einem der Ansprüche 1 bis 12 mit einem Gehäuse (12), einer 3-dimensionalen Kristallisations-Trägermatrix (13) mit grosser spezifischer Oberfläche, welche auf einer Rotationsachse (14) fixiert ist und mittels eines Motors (16) antreibbar ist, mit einer Fördereinrichtung (17) zur Förderung der Schmelze durch die Trägermatrix hindurch, einer Temperiervorrichtung (18) für die Schmelze und mit einer Heizeinrichtung (19) zum Aufschmelzen der kristallisierten Phase (1, 2, 3).

14. Kristallisator nach Anspruch 13, dadurch gekennzeichnet, dass die Heizeinrichtung (19) aus einem Generator (23) für Mikrowellen besteht, welche durch Mikrowellenfenster (24) hindurch in den Innenraum (11) des Kristallisators einstrahlbar sind.

15. Kristallisator nach Anspruch 14, dadurch gekennzeichnet, dass die Trägermatrix (13) eine geringere Absorption für Mikrowellen aufweist als das zu verarbeitende Gemisch.

16. Kristallisator nach einem der Ansprüche 13 bis 15, dadurch gekennzeichnet, dass die spezifische Oberfläche der Trägermatrix (13) zwischen 2 000 und 10 000 m²/m³ beträgt.

17. Kristallisator nach einem der Ansprüche 13 bis 16, dadurch gekennzeichnet, dass die Struktur der Trägermatrix (13) in radialer Richtung offen ist.

18. Kristallisator nach einem der Ansprüche 13 bis 17, dadurch gekennzeichnet, dass die Trägermatrix (13) aus einem offenporigen Schaum besteht.

19. Kristallisator nach Anspruch 18, dadurch gekennzeichnet, dass die mittlere Porengrösse zwischen 0.3 und 3 mm liegt.

20. Kristallisator nach einem der Ansprüche 13 bis 17, dadurch gekennzeichnet, dass die Trägermatrix (13) aus Nadelfilz z.B. aus Polyester oder PP besteht, welcher auf einer Tragstruktur fixiert ist.

21. Kristallisator nach einem der Ansprüche 13 bis 20, gekennzeichnet durch eine Trägermatrix (13) aus keramischem Material, Glas oder organischen Polymeren.

22. Kristallisator nach einem der Ansprüche 13 bis 19, gekennzeichnet durch eine Trägermatrix (13) aus Aluminiumoxid.

23. Kristallisator nach einem der Ansprüche 13 bis 22, gekennzeichnet durch eine mit mindestens einem Temperatursensor (21) und der Temperiervorrichtung (18) verbundene Steuer- und Regeleinheit (22).

24. Kristallisator nach Anspruch 23, dadurch gekennzeichnet, dass die Steuereinheit (22) auch einen Programmteil enthält und dass sie zusätzlich mit dem Motor (16) und der Fördereinrichtung (17) verbunden ist.

25. Anlage mit mehreren Kristallisatoren nach Ansprüchen 13 bis 24, welche parallel oder in Serie geschaltet betreibbar sind.

## Claims

1. A method of separating substances by crystallisation of difficultly-crystallisable mixtures of flexible C-H chains such as fatty acids, triglycerides, fatty alcohols, vitamins, paraffins and/or waxes, characterised in that the mixture is heated to a temperature TO above its melting-point in a crystalliser with a carrier material in the form of a three-dimensional crystallisation matrix (13) having a large specific area and a microstructured surface (26) facilitating crystallisation, the melted mixture is then slowly cooled over a temperature range (DT1) and simultaneously conveyed through the carrier matrix, selective crystallisation occurring from the supersaturated melt on the carrier matrix (13), after which the remaining melt is removed from the carrier matrix by centrifuging, whereupon the crystal phase (1) deposited on the carrier matrix is melted by heating and finally this melted phase is separated from the carrier matrix by centrifuging and removed.

2. A method according to claim 1, characterised in that the motion of the melt through the carrier matrix is generated by rotation of the carrier matrix itself.

3. A method according to claim 1 or 2, characterised in that heating is brought about by electromagnetic irradiation.

4. A method according to claim 3, characterised in that the electromagnetic irradiation is in the frequency range between 0.5 and 50 GHz.

5. A method according to claim 1 or 2, characterised in that heating is brought about by a flow of a hot medium such as water or air which is non-miscible with the mixture of substances.

6. A method according to claim 1 or 2, characterised in that heating is brought about by a flow of hot fractions of the substance mixture which are not less pure than the phase for melting.

7. A method according to any of claims 1 to 6, characterised in that during the cooling phase (DT1) the melt is continuously moved in a circuit through the carrier matrix (13).

8. A method according to any of claims 1 to 7, characterised by a sweating phase before melting, during which the deposited crystal phase is slightly warmed by brief reheating, so that material near the surface melts and is likewise removed by centrifuging.

9. A method according to any of claims 1 to 8, characterised in that the mixture is successively treated in a number of stages, each over one cooling range (DT1, DT2, DT3), and in each stage a fraction (1, 2, 3) is crystallised out, the cooling ranges having decreasing starting temperatures: T1 > T2 > T3.

10. A method according to claim 9, characterised in that during continuous operation the mixture flows once through each stage, is then fed to the next stage, and after the last stage is discharged or returned to the first stage, and alternately each stage is skipped for the purpose of melting and discharging the crystalline phase deposited therein.

11. A method according to claim 9 for discontinuous operation, during which batches of mixture run repeatedly through each stage (DT1) and are not transferred to the next stage (DT2) until most of the corresponding fraction (1) has been deposited, and after charging, the stages are discharged by melting and centrifuging.

12. A method according to any of claims 9 to 11, characterised in that the cooling ranges (DT1, DT2, DT3) overlap.

13. A crystalliser for performing the method according to any of claims 1 to 12 comprising a casing (12), a three-dimensional crystallisation carrier matrix (13) having a large specific area and secured to a rotary shaft (14) and drivable by a motor (16), a conveyor (17) for conveying the melt through the carrier matrix, a device (18) for controlling the temperature of the melt and a heater (19) for heating the crystallised phase (1, 2, 3).

14. A crystalliser according to claim 13, characterised in that the heater (19) comprises a generator (23) for microwaves for irradiating through microwave windows (24) into the interior (11) of the crystalliser.

15. A crystalliser according to claim 14, characterised in that the carrier matrix (13) has lower absorption for microwaves than the mixture for processing.

16. A crystalliser according to any of claims 13 to 15, characterised in that the specific surface area of the carrier matrix (13) is between 2000 and 10000 m²/m³.

17. A crystalliser according to any of claims 13 to 16, characterised in that the structure of the carrier matrix (13) is open in the radial direction.

18. A crystalliser according to any of claims 13 to 17, characterised in that the carrier matrix (13) is of open-pored foam.

19. A crystalliser according to claim 18, characterised in that the average pore size is between 0.3 and 3 mm.

20. A crystalliser according to any of claims 13 to 17, characterised in that the carrier matrix (13) is of needle felt, e.g. polyester or PP, secured to a bearing structure.

21. A crystalliser according to any of claims 13 to 20, characterised by a carrier matrix (13) of ceramic material, glass or organic polymers.

22. A crystalliser according to any of claims 13 to 19, characterised by an aluminium oxide carrier matrix.

23. A crystalliser according to any of claims 13 to 22, characterised by a control and regulating unit (22) connected to at least one temperature sensor (21) and the temperature-control device (18).

24. A crystalliser according to claim 23, characterised in that the control unit (22) also contains a program part and is additionally connected to the motor (16) and the conveyor (17).

25. An installation comprising a number of crystallisers according to claims 13 to 24, adapted for operation in parallel or in series connection.

## Revendications

1. Procédé pour séparer des substances par cristallisation de mélanges difficilement cristallisables de chaînes C-H flexibles tels qu'acides gras, triglycérides, alcools gras, vitamines, paraffines et/ou cires, caractérisé en ce que le mélange est chauffé à une température T0 supérieure à son point de fusion dans un cristallisateur possédant, comme matériau porteur, une matrice de cristallisation tridimensionnelle (13) à grande surface spécifique et à surface microstructurée (26) favorisant la cristallisation, en ce que la masse fondue du mélange est ensuite refroidie lentement sur une plage de températures (DT1) en traversant simultanément la matrice porteuse, une cristallisation sélective ayant alors lieu au niveau de la matrice porteuse (13) à partir de la masse fondue sursaturée, en ce que la masse fondue restante est ensuite retirée de la matrice porteuse par centrifugation, en ce que la phase cristalline (1) déposée sur la matrice porteuse est alors fondue par chauffage et cette phase en fusion est enfin séparée de la matrice porteuse par centrifugation et évacuée.

2. Procédé selon la revendication 1, caractérisé en ce que le déplacement de la masse fondue à travers la matrice porteuse est provoqué par la rotation de la matrice porteuse proprement dite.

3. Procédé selon la revendication 1 ou 2, caractérisé en ce que le chauffage s'effectue par rayonnement électromagnétique.

4. Procédé selon la revendication 3, caractérisé en ce que le rayonnement électromagnétique se trouve dans la plage de fréquences comprise entre 0,5 et 50 GHz.

5. Procédé selon la revendication 1 ou 2, caractérisé en ce que le chauffage s'effectue par le passage d'un milieu chaud, comme de l'eau ou de l'air, qui n'est pas miscible avec le mélange de substances.

6. Procédé selon la revendication 1 ou 2, caractérisé en ce que le chauffage s'effectue par le passage de fractions chaudes qui ne sont pas moins pures que la phase que l'on veut fondre.

7. Procédé selon l'une des revendications 1 à 6, caractérisé en ce que, lors de la phase de refroidissement (DT1), la masse fondue est mise en circulation continue à travers la matrice porteuse (13).

8. Procédé selon l'une des revendications 1 à 7, caractérisé par une phase de ressuage qui a lieu avant la fusion et où la phase cristalline déposée est légèrement réchauffée par un bref réchauffement, de façon que le matériau proche de la surface fonde et soit également éliminé par centrifugation.

9. Procédé selon l'une des revendications 1 à 8, caractérisé en ce que le mélange est traité en plusieurs étapes successives correspondant chacune à une plage de refroidissement (DT1, DT2, DT3) et, à chaque fois, une fraction (1, 2, 3) est séparée par cristallisation, les températures de départ des plages de refroidissement étant décroissantes (T1 > T2 > T3).

10. Procédé selon la revendication 9, caractérisé en ce que le mélange parcourt une fois chaque étape en mode continu, est ensuite dirigé vers l'étape suivante et est évacué au terme de la dernière étape ou est à nouveau dirigé vers la première étape, chaque étape étant alternativement occultée pour en fondre et en évacuer la phase cristalline déposée.

11. Procédé selon la revendication 9 pour mode discontinu, dans lequel le mélange parcourt plusieurs fois chaque étape (DT1) par charges et ne passe à l'étape suivante (DT2) qu'après que la majeure partie de la fraction correspondante (1) a été déposée, les échelons étant déchargés par fusion et centrifugation une fois le chargement effectué.

12. Procédé selon l'une des revendications 9 à 11, caractérisé en ce que les plages de refroidissement (DT1, DT2, DT3) se chevauchent.

13. Cristallisateur pour mettre en oeuvre le procédé conforme à l'une des revendications 1 à 12, comprenant une enceinte (12), une matrice porteuse tridimensionnelle de cristallisation (13) à grande surface spécifique qui est fixée sur un axe de rotation (14) et peut être entraînée au moyen d'un moteur (16), comprenant un dispositif d'alimentation (17) pour faire circuler la masse fondue à travers la matrice porteuse, un dispositif d'équilibrage de température (18) pour la masse fondue et un dispositif de chauffage (19) pour fondre la phase cristallisée (1, 2, 3).

14. Cristallisateur selon la revendication 13, caractérisé en ce que le dispositif de chauffage (19) est constitué par un générateur (23) de micro-ondes qui peuvent être envoyées dans la chambre intérieure (11) du cristallisateur à travers des fenêtres à micro-ondes (24).

15. Cristallisateur selon la revendication 14, caractérisé en ce que la matrice porteuse (13) possède, pour les micro-ondes, une absorption inférieure à celle du mélange que l'on veut traiter.

16. Cristallisateur selon l'une des revendications 13 à 15, caractérisé en ce que la surface spécifique de la matrice porteuse (13) est comprise entre 2000 et 10 000 m²/m³.

17. Cristallisateur selon l'une des revendications 13 à 16, caractérisé en ce que la structure de la matrice porteuse (13) est ouverte dans le sens radial.

18. Cristallisateur selon l'une des revendications 13 à 17, caractérisé en ce que la matrice porteuse (13) est constituée d'une mousse à pores ouverts.

19. Cristallisateur selon la revendication 18, caractérisé en ce que la grosseur moyenne des pores est comprise entre 0,3 et 3 mm.

20. Cristallisateur selon l'une des revendications 13 à 17, caractérisé en ce que la matrice porteuse (13) est réalisée en feutre aiguilleté, par exemple en polyester ou en polypropylène, qui est fixé sur une structure porteuse.

21. Cristallisateur selon l'une des revendications 13 à 20, caractérisé par une matrice porteuse (13) en matériau céramique, en verre ou en polymères organiques.

22. Cristallisateur selon l'une des revendications 13 à 19, caractérisé par une matrice porteuse (13) en oxyde d'aluminium.

23. Cristallisateur selon l'une des revendications 13 à 22, caractérisé par une unité de commande et de régulation (22) reliée à au moins un capteur thermique (21) et au dispositif d'équilibrage de température (18).

24. Cristallisateur selon la revendication 23, caractérisé en ce que l'unité de commande (22) comprend également une partie de programme et en ce qu'elle est également reliée au moteur (16) et au dispositif d'alimentation (17).

25. Installation à plusieurs cristallisateurs conformes aux revendications 13 à 24, qui peuvent être exploités en étant montés en parallèle ou en série.
